# EUROPÄISCHE PATENTSCHRIFT

(11) **EP 3 262 116 B1**
(45) Veröffentlichungstag und Bekanntmachung des Hinweises auf die Patenterteilung: **18.09.2019**
(21) Anmeldenummer: 16706822.0
(22) Anmeldetag: 18.02.2016
(51) Int. Cl.: C08L 31/04, C04B 40/00, C04B 28/04, C09J 131/04, C08J 3/12, C09D 5/34, C04B 103/00

(54) **POLYMERMISCHUNGEN IN FORM VON WÄSSRIGEN DISPERSIONEN ODER IN WASSER REDISPERGIERBAREN PULVERN**
POLYMER BLENDS IN THE FORM OF AQUEOUS DISPERSIONS OR POWDERS THAT CAN BE RE-DISPERSED IN WATER
MÉLANGES POLYMÈRES SOUS FORME DE DISPERSIONS AQUEUSES OU DE POUDRES REDISPERSIBLES DANS L'EAU

(30) Priorität: 23.02.2015 DE 102015203227
(43) Veröffentlichungstag der Anmeldung: 03.01.2018
(73) Patentinhaber: Wacker Chemie AG, 81737 München (DE)
(72) Erfinder: WEITZEL, Hans-Peter, 84571 Reischach (DE); DIETRICH, Ulf, 84489 Burghausen (DE); FRITZE, Peter, 84533 Haiming (DE); SORGER, Klas, 81371 München (DE)
(74) Vertreter: Ege, Markus
(86) Internationale Anmeldenummer: PCT/EP2016/053468
(87) Internationale Veröffentlichungsnummer: WO 2016/135039

(56) Entgegenhaltungen:
- EP-A1- 1 238 958
- WO-A1-2013/178721

## Beschreibung

Die Erfindung gemäß Ansprüche 1 bis 11 betrifft Polymermischungen in Form von wässrigen Dispersionen oder in Wasser redispergierbaren Pulvern enthaltend mindestens zwei verschiedene Polymerisate von ethylenisch ungesättigten Monomeren, Verfahren zur Herstellung der Polymermischungen sowie deren Verwendung in bauchemischen Produkten, insbesondere in Verbindung mit hydraulisch abbindenden Bindemitteln, beispielsweise in Klebemörteln, wie Fliesenkleber.

Als Polymerisate in Form von in Wasser redispergierbaren Pulvern (Polymerpulver) bezeichnet man Pulverzusammensetzungen, welche mittels Trocknung der entsprechenden wässrigen Polymerdispersionen in Gegenwart von Schutzkolloiden zugänglich werden. Aufgrund dieses Herstellungsprozesses wird das feinteilige Polymerharz der Dispersion mit einem wasserlöslichen Schutzkolloid ausreichender Menge umhüllt. Bei der Trocknung wirkt das Schutzkolloid wie ein Mantel, welcher das Zusammenkleben der Teilchen verhindert. Beim Redispergieren der Polymerpulver in Wasser löst sich das Schutzkolloid wieder in Wasser und es liegt eine wässrige Dispersion der ursprünglichen Polymerteilchen vor (Schulze J. in TIZ, No. 9, 1985).

Seit einiger Zeit ist der Einsatz von Polymerpulvern oder wässrigen Dispersionen von Polymeren auf Basis ethylenisch ungesättigter Monomere, wie Vinylacetat und Ethylen, in bauchemischen Produkten, wie Trockenmörteln, zur Verbesserung von deren anwendungstechnischen Eigenschaften etabliert. Zur Verbesserung der Haftzugfestigkeiten von bauchemischen Produkten wurde der Zusatz von Polymeren mit speziellen Monomer-Zusammensetzungen empfohlen, wie beispielsweise in der WO-A 2013/178721, EP-A 1262465, EP-A 1238958, EP-A 0255363 oder der EP-A 0334591 beschrieben. Die EP-A 2399955 und die WO-A 6099960 lehren hierfür den Einsatz von Polymermischungen. Der EP-A 2158265 und EP-A 702057 sind Polymermischungen von Vinylester-Copolymeren zur Verbesserung der Wasser- und Wärme-Beständigkeit von Applikationsprodukten entnehmbar.

Zusätzlich zum Eigenschaftsprofil der applizierten Baustoffmassen verlangen Anwender auch eine einfache und komfortable Applizierbarkeit der Baustoffmassen. So sind Baustoffmassen mit längerer offener Zeit und zugleich verbesserter Standfestigkeit gefragt. Eine längere offene Zeit ermöglicht eine längere Verarbeitungsdauer der Baustoffmassen sowie eine Korrektur der applizierten Baustoffmassen, bevor die Baustoffmassen aushärten. Eine verbesserte Standfestigkeit führt dazu, dass applizierte Baustoffmassen formstabil sind und beispielsweise nicht von einer Wand "abrutschen". Solche an sich widerstrebende Eigenschaften sollen nach Möglichkeit durch Zusatz von nur einem einzigen Additiv gesteuert werden können. Denn ein Zusatz von weiteren, insbesondere chemisch unterschiedlichen Additiven oder größeren Mengen solcher Additive ist bei Anwendern verpönt, da solche Additive vielfachen, mitunter unvorhersehbaren Einfluss auf die Baustoffmassen oder Bauwerke haben können und das Eigenschaftsprofil der optimierten Formulierungen verschlechtern können. Die WO-A 14052033 beschreibt zur Verlängerung der offenen Zeit und zur Beschleunigung der Abbindegeschwindigkeit von Mörteln Polymerpulver-Mischungen enthaltend Styrol- und (Meth)Acrylat-Copolymere, die frei von Schutzkolloiden, wie Polyvinylalkohol, sind.

Darüber hinaus sollen die ausgehärteten Bauprodukte bei Belastung verformungsstabil sein.

Vor diesem Hintergrund bestand die Aufgabe, Additive für bauchemische Produkte bereitzustellen, mit denen die offene Zeit von Baustoffmassen verlängert und zugleich die Standfestigkeit der noch nicht vollständig abgebundenen Baustoffmassen verbessert werden kann. Darüber hinaus sollten die damit erhältlichen ausgehärteten Bauprodukte nach Möglichkeit verformungsstabiler sein.

Ein Gegenstand der Erfindung sind Polymermischungen in Form von wässrigen Dispersionen oder in Wasser redispergierbaren Pulvern enthaltend
A) ein oder mehrere Schutzkolloid-stabilisierte Polymerisate basierend auf 20 bis 30 Gew.-% Vinylchlorid, 50 bis 75 Gew.-% Vinylacetat, 5 bis 20 Gew.-% Ethylen und gegebenenfalls einem oder mehreren zusätzlichen weiteren ethylenisch ungesättigten Monomeren, wobei sich die Angaben in Gew.-% auf das Gesamtgewicht der Monomere beziehen und sich auf 100 Gew.-% aufaddieren, und
B) ein oder mehrere Schutzkolloid-stabilisierte, Vinylhalogenid-freie Polymerisate von einem oder mehreren ethylenisch ungesättigten Monomeren.

Die Polymermischungen enthalten vorzugsweise 5 bis 95 Gew.-%, mehr bevorzugt 10 bis 90 Gew.-%, besonders bevorzugt 20 bis 80 Gew.-% und am meisten bevorzugt 30 bis 70 Gew.-% an einem oder mehreren Polymerisaten A), bezogen auf das Trockengewicht der Polymerisate A) und B).

Die Polymermischungen enthalten vorzugsweise 5 bis 95 Gew.-%, mehr bevorzugt 10 bis 90 Gew.-%, besonders bevorzugt 20 bis 80 Gew.-% und am meisten bevorzugt 30 bis 70 Gew.-% an einem oder mehreren Polymerisaten B), bezogen auf das Trockengewicht der Polymerisate A) und B).

Die Polymerisate A) und B) sind voneinander verschieden.

Die Polymermischungen enthalten vorzugsweise 5 bis 95 Gew.-%, mehr bevorzugt 15 bis 90 Gew.-%, noch mehr bevorzugt 30 bis 90 Gew.-%, besonders bevorzugt 40 bis 85 Gew.-%, am meisten bevorzugt 50 bis 80 Gew.-% und am allermeisten bevorzugt 60 bis 75 Gew.-% an Polymerisaten A) und Polymerisaten B), bezogen auf das Trockengewicht der Polymermischungen. Die Angaben beziehen sich hierbei auch auf das Trockengewicht der Polymerisate A) und Polymerisate B).

Die zusätzlichen weiteren ethylenisch ungesättigten Monomere für die Polymerisate A) werden vorzugsweise ausgewählt aus der Gruppe umfassend Vinylpropionat, Vinylbutyrat, Vinyl-2-ethylhexanoat, Vinyllaurat, 1-Methylvinylacetat, Vinylpivalat und Vinylester von α-verzweigten Monocarbonsäuren mit 9 bis 11 C-Atomen, beispielsweise VeoVa9R oder VeoValOR (Handelsnamen der Firma Hexion), (Meth)acrylsäureester, Vinylaromaten, Propylen und 1,3-Diene. Die weiteren ethylenisch ungesättigten Monomere umfassen allgemein kein Vinylhalogenid, insbesondere kein Vinylchlorid.

Geeignete Ester der Acrylsäure oder Methacrylsäure sind beispielsweise Ester von unverzweigten oder verzweigten Alkoholen mit 1 bis 15 C-Atomen, wie Methylacrylat, Methylmethacrylat, Ethylacrylat, Ethylmethacrylat, Propylacrylat, Propylmethacrylat, n-Butylacrylat, n-Butylmethacrylat, 2-Ethylhexylacrylat, Norbornylacrylat. Bevorzugt sind Methylacrylat, Methylmethacrylat, n-Butylacrylat und 2-Ethylhexylacrylat.

Als Vinylaromaten bevorzugt sind Styrol, Methylstyrol und Vinyltoluol. Die bevorzugten Diene sind 1,3-Butadien oder Isopren.

Bei Einsatz von mehreren Vinylestern ist eine Kombination von Vinylacetat und einem oder mehreren Vinylestern von Carbonsäuren mit 3 bis 15 C-Atomen bevorzugt, beispielsweise Vinylacetat in Kombination mit Vinyllaurat und/oder Vinylester von α-verzweigten Monocarbonsäuren mit 9 bis 13 C-Atomen.

Von Vinylhalogeniden, Vinylestern und Olefinen verschiedene Monomere werden vorzugsweise zu 0 bis 20 Gew.-%, besonders bevorzugt 0 bis 10 Gew.-% und am meisten bevorzugt 0 bis 5 Gew.-% eingesetzt, bezogen auf das Gesamtgewicht der Monomere. Die weiteren Monomere umfassen vorzugsweise weniger als 10 Gew.-%, besonders bevorzugt weniger als 5 Gew.-% und am meisten bevorzugt weniger als 1 Gew.-% an Vinylaromaten und Estern der Acrylsäure oder Methacrylsäure, je bezogen auf das Gesamtgewicht der Monomere. Am meisten bevorzugt enthalten die Polymerisate A) keine Monomer-Einheit eines Vinylaromats und/oder keine Monomer-Einheit eines Esters der Acrylsäure oder Methacrylsäure.

Gegebenenfalls können noch 0,05 bis 10 Gew.-%, vorzugsweise 0,05 bis 5 Gew.-% und besonders bevorzugt 0,05 bis 2,5 Gew.-%, bezogen auf das Gesamtgewicht der ethylenisch ungesättigten Monomere, Hilfsmonomere copolymerisiert werden. Am meisten bevorzugt werden keine Hilfsmonomere copolymerisiert. Beispiele für Hilfsmonomere sind ethylenisch ungesättigte Mono- und Dicarbonsäuren, vorzugsweise Acrylsäure, Methacrylsäure, Fumarsäure und Maleinsäure; ethylenisch ungesättigte Carbonsäureamide und -nitrile, vorzugsweise Acrylamid und Acrylnitril; Mono- und Diester der Fumarsäure und Maleinsäure wie die Diethyl- und Diisopropylester, sowie Maleinsäureanhydrid, ethylenisch ungesättigte Sulfonsäuren bzw. deren Salze, vorzugsweise Vinylsulfonsäure, 2-Acrylamido-2-methyl-propansulfonsäure. Weitere Beispiele sind vorvernetzende Comonomere wie mehrfach ethylenisch ungesättigte Comonomere, beispielsweise Divinyladipat, Diallylmaleat, Allylmethacrylat oder Triallylcyanurat, oder nachvernetzende Comonomere, beispielsweise Acrylamidoglykolsäure (AGA), Methacryl-amidoglykolsäuremethylester (MAGME), N-Methylolacrylamid (NMA), N-Methylolmethacrylamid (NMMA), N-Methylolallylcarbamat, Alkylether wie der Isobutoxyether oder Ester des N-Methylolacrylamids, des N-Methylolmethacrylamids und des N-Methylolallylcarbamats. Geeignet sind auch epoxidfunktionelle Comonomere wie Glycidylmethacrylat und Glycidylacrylat. Weitere Beispiele sind siliciumfunktionelle Comonomere, wie Acryloxypropyltri(alkoxy)- und Methacryloxypropyltri(alkoxy)-Silane, Vinyltrialkoxysilane und Vinylmethyldialkoxysilane, wobei als Alkoxygruppen beispielsweise Methoxy-, Ethoxy- und Ethoxypropylenglykolether-Reste enthalten sein können. Genannt seien auch Monomere mit Hydroxy- oder CO-Gruppen, beispielsweise Methacrylsäure- und Acrylsäurehydroxyalkylester wie Hydroxyethyl-, Hydroxypropyl- oder Hydroxybutylacrylat oder -methacrylat sowie Verbindungen wie Diacetonacrylamid und Acetylacetoxyethylacrylat oder - methacrylat.

Die Polymerisate A) basieren auf 20 bis 30 Gew. -% Vinylchlorid, 50 bis 75 Gew.-% Vinylacetat, 5 bis 20 Gew. -% Ethylen und gegebenenfalls einem oder mehreren zusätzlichen weiteren ethylenisch ungesättigten Monomeren, wobei sich die Angaben in Gew.-% auf das Gesamtgewicht der Monomere beziehen und sich auf 100 Gew.-% aufaddieren.

Die Polymerisate B) sind allgemein erhältlich mittels radikalisch initiierter Polymerisation von einem oder mehreren, von Vinylhalogeniden verschiedenen, insbesondere von Vinylchlorid verschiedenen ethylenisch ungesättigten Monomeren. Die Polymerisate B) enthalten im Allgemeinen keine Vinylhalogenid-Einheit, insbesondere keine Vinylchlorid-Einheit. Die Polymerisate B) sind also allgemein von Polymerisaten A) verschieden.

Die Polymerisate B) basieren vorzugsweise auf einem oder mehreren ethylenisch ungesättigten Monomeren ausgewählt aus der Gruppe umfassend Vinylester, (Meth)acrylsäureester, Vinylaromaten, Olefine und 1,3-Diene. Klarstellend sei angemerkt, dass die ethylenisch ungesättigten Monomere zur Herstellung der Polymerisate B) kein Vinylhalogenid, insbesondere kein Vinylchlorid umfassen.

Die in Bezug auf die Polymerisate B) genannten Monomere können die weiter oben bei der Beschreibung der Polymerisate A) genannten, bevorzugten bzw. am meisten bevorzugten Bedeutungen annehmen. Zusätzlich können die Polymerisate B) die oben genannten Hilfsmonomere in den oben genannten Mengen enthalten.

Bevorzugt werden Polymerisate B), welche ein oder mehrere Monomere aus der Gruppe umfassend Vinylacetat, Vinylester von α-verzweigten Monocarbonsäuren mit 9 bis 13 C-Atomen, Ethylen, Methylacrylat, Methylmethacrylat, Ethylacrylat, Ethylmethacrylat, Propylacrylat, Propylmethacrylat, n-Butylacrylat, n-Butylmethacrylat, 2-Ethylhexylacrylat, 2-Propylheptylacrylat, Styrol und Butadien enthalten.

Mehr bevorzugt werden als Polymerisate B) Homopolymerisate von Vinylacetat; Mischpolymerisate mit Vinylacetat und Ethylen; Mischpolymerisate mit Vinylacetat, Ethylen und einem Vinylester von α-verzweigten Monocarbonsäuren mit 9 bis 13 C-Atomen; Mischpolymerisate mit Vinylacetat und einem oder mehreren (Meth)Acrylsäureestern von unverzweigten oder verzweigten Alkoholen mit 1 bis 18 C-Atomen, insbesonders Methylacrylat, Ethylacrylat, Propylacrylat, n-Butylacrylat, 2-Ethylhexylacrylat, 2-Propylheptylacrylat und gegebenenfalls Ethylen; Mischpolymerisate mit einem oder mehreren (Meth)Acrylsäureestern von unverzweigten oder verzweigten Alkoholen mit 1 bis 18 C-Atomen, wie n-Butylacrylat und 2-Ethylhexylacrylat und/oder Methylmethacrylat und gegebenenfalls Ethylen; Mischpolymerisate mit Styrol und einem oder mehreren Monomeren aus der Gruppe Methylacrylat, Ethylacrylat, Propylacrylat, n-Butylacrylat, 2-Ethylhexylacrylat und gegebenenfalls Ethylen; Mischpolymerisate mit 1,3-Butadien und Styrol und/oder Methylmethacrylat sowie gegebenenfalls weiteren Acrylsäureestern; wobei die genannten Gemische gegebenenfalls noch ein oder mehrere der obengenannten Hilfsmonomere enthalten können.

Besonders bevorzugt werden Mischpolymerisate von einem oder mehreren Vinylestern mit 1 bis 50 Gew.-% Ethylen; Mischpolymerisate von Vinylacetat mit 1 bis 50 Gew.-% Ethylen und 1 bis 50 Gew.-% von einem oder mehreren weiteren Comonomeren aus der Gruppe Vinylester mit 1 bis 13 C-Atomen im Carbonsäurerest wie Vinylpropionat, Vinyllaurat, Vinylester von alpha-verzweigten Carbonsäuren mit 9 bis 13 C-Atomen wie VeoVa9, VeoVa10, Veo-Vall; Mischpolymerisate von ein oder mehreren Vinylestern, 1 bis 50 Gew.-% Ethylen und vorzugsweise 1 bis 60 Gew.-% (Meth)-Acrylsäureester von unverzweigten oder verzweigten Alkoholen mit 1 bis 15 C-Atomen, insbesonders n-Butylacrylat, 2-Propylheptylacrylat oder 2-Ethylhexylacrylat; und Mischpolymerisate mit 30 bis 75 Gew.-% Vinylacetat, 1 bis 30 Gew.-% Vinyllaurat oder Vinylester einer alpha-verzweigten Carbonsäure mit 9 bis 13 C-Atomen, sowie 1 bis 30 Gew.-% (Meth)Acrylsäureester von unverzweigten oder verzweigten Alkoholen mit 1 bis 17 C-Atomen, insbesonders n-Butylacrylat, 2-Propylheptylacrylat oder 2-Ethylhexylacrylat, welche noch 1 bis 40 Gew.-% Ethylen enthalten; wobei die Polymerisate noch die genannten Hilfsmonomere in den genannten Mengen enthalten können, und sich die Angaben in Gew.-% auf jeweils 100 Gew.-% aufaddieren.

Besonders bevorzugt werden auch (Meth)acrylsäureester-Polymerisate, wie Mischpolymerisate von n-Butylacrylat oder 2-Ethylhexylacrylat oder Copolymerisate von Methylmethacrylat mit n-Butylacrylat und/oder 2-Ethylhexylacrylat und gegebenenfalls Ethylen; Vinylacetat-Acrylsäureester-Copolymerisate mit einem oder mehreren Monomeren aus der Gruppe Methylacrylat, Ethylacrylat, Propylacrylat, n-Butylacrylat, 2-Ethylhexylacrylat, 2-Propylheptylacrylat und gegebenenfalls Ethylen; wobei die Polymerisate noch Hilfsmonomere in den genannten Mengen enthalten können, und sich die Angaben in Gew.-% auf jeweils 100 Gew.-% aufaddieren.

Am meisten bevorzugt werden Mischpolymerisate mit Vinylacetat und 1 bis 50 Gew.-%, insbesondere 5 bis 30 Gew.-% Ethylen; oder Mischpolymerisate mit Vinylacetat, 1 bis 50 Gew.-% Ethylen und 1 bis 50 Gew.-% von einem Vinylester von α-verzweigten Monocarbonsäuren mit 9 bis 13 C-Atomen; oder Mischpolymerisate mit 30 bis 75 Gew.-% Vinylacetat, 1 bis 30 Gew.-% Vinyllaurat oder Vinylester einer alpha-verzweigten Carbonsäure mit 9 bis 13 C-Atomen, sowie 1 bis 30 Gew.-% (Meth)Acrylsäureester von unverzweigten oder verzweigten Alkoholen mit 1 bis 17 C-Atomen, welche noch 1 bis 40 Gew.-% Ethylen enthalten; wobei sich die Angaben in Gew.-% auf jeweils 100 Gew.-% aufaddieren.

Die Monomerauswahl bzw. die Auswahl der Gewichtsanteile der Comonomere erfolgt dabei so, dass für die Polymerisate A), die Polymerisate B) bzw. für die Polymermischungen im Allgemeinen Glasübergangstemperaturen Tg von ≤ +120°C, vorzugsweise -50°C bis +60°C, noch mehr bevorzugt -30°C bis +40°C und am meisten bevorzugt -15°C bis +20°C, resultieren. Die Glasübergangstemperatur Tg der Polymerisate kann in bekannter Weise mittels Differential Scanning Calorimetry (DSC) ermittelt werden. Die Tg kann auch mittels der Fox-Gleichung näherungsweise vorausberechnet werden. Nach Fox T. G., Bull. Am. Physics Soc. 1, 3, page 123 (1956) gilt: 1/Tg = x1/Tg1 + x2/Tg2 + ... + xn/Tgn, wobei xn für den Massebruch (Gew.-%/100) des Monomeren n steht, und Tgn die Glasübergangstemperatur in Kelvin des Homopolymeren des Monomeren n ist. Tg-Werte für Homopolymerisate sind in Polymer Handbook 2nd Edition, J. Wiley & Sons, New York (1975) aufgeführt.

Die Herstellung der Polymerisate A) bzw. B) erfolgt im Allgemeinen durch radikalisch initiierte Polymerisation der ethylenisch ungesättigten Monomere in wässrigem Medium, beispielsweise nach den an sich bekannten Suspensions- oder vorzugsweise Emulsions-Polymerisationsverfahren. Die Polymerisate A) und B) werden im Allgemeinen separat voneinander hergestellt. Die Polymerisation erfolgt im Allgemeinen in Gegenwart von Emulgatoren oder vorzugsweise von Schutzkolloiden.

Die Polymerisationstemperatur beträgt im Allgemeinen 40°C bis 150°C, vorzugsweise 60°C bis 90°C. Die Initiierung der Polymerisation kann mit den für die Emulsionspolymerisation gebräuchlichen Redox-Initiator-Kombinationen erfolgen. Beispiele für geeignete Oxidationsinitiatoren sind die Natrium-, Kalium- und Ammoniumsalze der Peroxodischwefelsäure, Wasserstoffperoxid, t-Butylperoxid, t-Butylhydroperoxid, Kaliumperoxodiphosphat, t-Butylperoxopivalat, Cumolhydroperoxid, Isopropylbenzolmonohydroperoxid Azobisisobutyronitril. Bevorzugt werden die Natrium-, Kalium- und Ammoniumsalze der Peroxodischwefelsäure und Wasserstoffperoxid. Die genannten Initiatoren werden im Allgemeinen in einer Menge von 0,01 bis 2,0 Gew.-%, bezogen auf das Gesamtgewicht der ethylenisch ungesättigten Monomere, eingesetzt.

Geeignete Reduktionsmittel sind beispielsweise die Sulfite und Bisulfite der Alkalimetalle und von Ammonium, wie Natriumsulfit, die Derivate der Sulfoxylsäure wie Zink- oder Alkaliformaldehydsulfoxylate, beispielsweise Natriumhydroxymethansulfinat (Brüggolit) und (Iso-)Ascorbinsäure. Bevorzugt werden Natriumhydroxymethansulfinat und (Iso-)Ascorbinsäure. Die Reduktionsmittelmenge beträgt vorzugsweise 0,015 bis 3 Gew.-%, bezogen auf das Gesamtgewicht der ethylenisch ungesättigten Monomere.

Die genannten Oxidationsmittel, insbesondere die Salze der Peroxodischwefelsäure, können auch alleinig als thermische Initiatoren eingesetzt werden.

Zur Steuerung des Molekulargewichts können während der Polymerisation regelnde Substanzen eingesetzt werden. Falls Regler eingesetzt werden, werden diese üblicherweise in Mengen zwischen 0,01 und 5,0 Gew.-%, bezogen auf die zu polymerisierenden Monomeren, eingesetzt und separat oder auch vorgemischt mit Reaktionskomponenten dosiert. Beispiele solcher Substanzen sind n-Dodecylmercaptan, tert.-Dodecylmercaptan, Mercaptopropionsäure, Mercaptopropionsäuremethylester, Isopropanol und Acetaldehyd. Vorzugsweise werden keine regelnden Substanzen verwendet.

Zur Stabilisierung des Polymerisationsansatzes gebräuchliche Schutzkolloide sind beispielsweise teilverseifte oder vollverseifte Polyvinylalkohole; Polyvinylpyrrolidone; Polyvinylacetale; Polysaccharide in wasserlöslicher Form wie Stärken (Amylose und Amylopectin), Cellulosen oder deren Derivate, wie Carboxymethyl-, Methyl-, Hydroxyethyl-, Hydroxypropyl-Derivate; Proteine wie Casein oder Caseinat, Sojaprotein, Gelatine; Ligninsulfonate; synthetische Polymere wie Poly(meth)acrylsäure, Copolymerisate von (Meth)acrylaten mit carboxylfunktionellen Comonomereinheiten, Poly(meth)acrylamid, Polyvinylsulfonsäuren und deren wasserlöslichen Copolymere; Melaminformaldehydsulfonate, Naphthalinformaldehydsulfonate, Styrolmaleinsäure- und Vinylethermaleinsäure-Copolymere. Die Schutzkolloide sind im Handel erhältlich und mittels dem Fachmann bekannter Verfahren zugänglich.

Bevorzugte Schutzkolloide sind teilverseifte oder vollverseifte Polyvinylalkohole. Besonders bevorzugt sind teilverseifte Polyvinylalkohole mit einem Hydrolysegrad von 80 bis 95 Mol-%, insbesondere 83 bis 93 Mol-%, und einer Höpplerviskosität, in 4 %-iger wässriger Lösung, von 1 bis 30 mPas, insbesondere 3 bis 15 mPas (Methode nach Höppler bei 20°C, DIN 53015).

Als Schutzkolloide werden vorzugsweise keine Cellulose und/oder keine Cellulose-Derivate eingesetzt. Besonders bevorzugt werden als Schutzkolloide neben ein oder mehreren Polyvinylalkoholen keine weiteren Schutzkolloide eingesetzt.

Die Schutzkolloide werden im Allgemeinen in einer Menge von insgesamt 1 bis 20 Gew.-%, bezogen auf das Gesamtgewicht der ethylenisch ungesättigten Monomere, bei der Polymerisation zugesetzt.

Vorzugsweise wird ohne Zusatz von Emulgatoren, insbesondere ohne Zusatz von anionischen Emulgatoren polymerisiert. Falls unter Zusatz von Emulgatoren polymerisiert wird, so sind bevorzugte Mengen an Emulgatoren 0,2 bis 5 Gew.-%, bezogen auf die Monomermenge. Geeignete Emulgatoren sind beispielsweise gängige anionische, kationische oder nichtionische Emulgatoren, wie anionische Tenside, insbesondere Alkylsulfate mit einer Kettenlänge von 8 bis 18 C-Atomen, Alkyl- oder Alkylarylethersulfate mit 8 bis 18 C-Atomen im hydrophoben Rest und bis zu 40 Ethylen- oder Propylenoxideinheiten, Alkyl- oder Alkylarylsulfonate mit 8 bis 18 C-Atomen, Ester und Halbester der Sulfobernsteinsäure mit einwertigen Alkoholen oder Alkylphenolen, oder nichtionische Tenside, wie Alkylpolyglykolether oder Alkylarylpolyglykolether mit 8 bis 40 Ethylenoxid-Einheiten.

Nach Abschluss der Polymerisation kann zur Restmonomerentfernung in Anwendung bekannter Methoden nachpolymerisiert werden, beispielsweise durch mit Redoxkatalysator initiierter Nachpolymerisation. Flüchtige Restmonomere können auch mittels Destillation, vorzugsweise unter reduziertem Druck, und gegebenenfalls unter Durchleiten oder Überleiten von inerten Schleppgasen wie Luft, Stickstoff oder Wasserdampf entfernt werden.

Die Polymerisate werden im Allgemeinen in Form von wässrigen Dispersionen, insbesondere in Form von Schutzkolloid-stabilisierten wässrigen Dispersionen erhalten. Die wässrigen Polymerdispersionen haben einen Feststoffgehalt von vorzugsweise 30 bis 75 Gew.-% und besonders bevorzugt 50 bis 65 Gew.-%.

Zur Herstellung von in Wasser redispergierbaren Polymerpulvern können die wässrigen Dispersionen, gegebenenfalls nach Zusatz von Schutzkolloiden als Trocknungshilfe, getrocknet werden, beispielsweise mittels Wirbelschichttrocknung, Gefriertrocknung oder Sprühtrocknung. Vorzugsweise werden die Dispersionen sprühgetrocknet. Die Sprühtrocknung kann dabei in üblichen Sprühtrocknungsanlagen durchgeführt werden, wobei die Zerstäubung beispielsweise mittels Ein-, Zwei- oder Mehrstoffdüsen oder mit einer rotierenden Scheibe erfolgen kann. Die Austrittstemperatur wird im Allgemeinen im Bereich von 45°C bis 120°C, bevorzugt 60°C bis 90°C, je nach Anlage, Tg des Harzes und gewünschtem Trocknungsgrad, gewählt.

In der Regel wird die Trocknungshilfe in einer Gesamtmenge von 3 bis 30 Gew.-%, bezogen auf die polymeren Bestandteile der Dispersion, eingesetzt. Die Gesamtmenge an Schutzkolloid vor dem Trocknungsvorgang beträgt vorzugsweise 3 bis 30 Gew.-%, besonders bevorzugt 5 bis 20 Gew.-%, bezogen auf den Polymeranteil. Geeignete Trocknungshilfen sind beispielsweise die oben genannten Schutzkolloide, insbesondere die oben genannten Polyvinylalkohole. Bevorzugt werden keine weiteren Schutzkolloide als Polyvinylalkohole als Trocknungshilfe eingesetzt.

Bei der Verdüsung hat sich vielfach ein Gehalt von bis zu 3 Gew.-% Antischaummittel, bezogen auf das Basispolymerisat, als günstig erwiesen. Zur Erhöhung der Lagerfähigkeit durch Verbesserung der Verblockungsstabilität kann das erhaltene Pulver mit einem Antiblockmittel (Antibackmittel), vorzugsweise bis 30 Gew.-%, bezogen auf das Gesamtgewicht polymerer Bestandteile, ausgerüstet werden. Beispiele für Antiblockmittel sind Ca- bzw. Mg-Carbonat, Talk, Gips, Kieselsäure, insbesondere hydrophobe Kieselsäure, Kaoline, Silicate mit Teilchengrößen vorzugsweise im Bereich von 10 nm bis 10 µm.

Die Viskosität der zu verdüsenden Speise wird über den Feststoffgehalt vorzugsweise so eingestellt, dass ein Wert von < 500 mPas (Brookfield-Viskosität bei 20 Umdrehungen und 23°C), besonders bevorzugt < 250 mPas, erhalten wird. Der Feststoffgehalt der zu verdüsenden Dispersion beträgt bevorzugt > 35%, besonders bevorzugt > 40%.

Zur Verbesserung der anwendungstechnischen Eigenschaften können weitere Zusätze zugegeben werden, beispielsweise bei der Verdüsung. Weitere, in bevorzugten Ausführungsformen enthaltene Bestandteile von redispergierbaren Polymerpulver-Zusammensetzungen sind Pigmente, Füllstoffe, Schaumstabilisatoren, Hydrophobierungsmittel.

Die Polymermischungen beziehungsweise die Polymerisate A) und/oder die Polymerisate B) liegen beispielsweise in Form von Schutzkolloid-stabilisierten, in Wasser redispergierbaren Pulvern vor. Vorzugsweise enthalten die Polymermischungen in Form von wässrigen Dispersionen oder in Wasser redispergierbaren Pulvern neben einem oder mehreren Polyvinylalkoholen keine weiteren Schutzkolloide. Bevorzugte Polymermischungen in Form von wässrigen Dispersionen oder in Wasser redispergierbaren Pulvern enthalten keine anionischen Emulgatoren, insbesondere keine Emulgatoren.

Auch die Polymermischungen können Antiblockmittel, insbesondere die oben genannten Antiblockmittel, und gegebenenfalls Antischaummittel enthalten. Des Weiteren können die Polymermischungen die weiter oben beschriebenen Zusätze enthalten.

Ein weiterer Gegenstand der Erfindung sind Verfahren zur Herstellung der erfindungsgemäßen Polymermischungen in Form von wässrigen Dispersionen oder in Wasser redispergierbaren Pulvern, dadurch gekennzeichnet, dass
ein oder mehrere erfindungsgemäße Polymerisate A) und ein oder mehrere erfindungsgemäße Polymerisate B) gemischt werden.

Das Mischen der Polymerisate A) und B) erfolgt im Allgemeinen im Anschluss an die Herstellung oder zu einem beliebigen Zeitpunkt nach der Herstellung der Polymerisate mittels Polymerisation. Das Mischen der Polymerisate A) und B) kann vor, während oder nach der Trocknung ihrer wässrigen Dispersionen erfolgen. Die Polymerisate A) und B) können in wässriger oder trockener Form gemischt werden. Vorzugsweise liegen die Polymerisate A) und B) während des Mischens in Form von wässrigen Dispersionen oder in Form von in Wasser redispergierbaren Pulvern vor.

In einer bevorzugten Ausführungsform zur Herstellung von Polymermischungen in Form von in Wasser redispergierbaren Pulvern werden wässrige Dispersionen von Polymerisaten A) mit wässrigen Dispersionen von Polymerisaten B) gemischt und die so erhaltene wässrige Mischung getrocknet. Alternativ können wässrige Dispersionen von Polymerisaten A) und wässrige Dispersionen von Polymerisaten B), räumlich getrennt oder räumlich gemeinsam, in eine Trocknungsanlage zur Herstellung von Polymermischungen in Form von in Wasser redispergierbaren Pulvern eingebracht werden. Schließlich ist es auch möglich, Polymerisate A) in Form von in Wasser redispergierbaren Pulvern und Polymerisate B) in Form von in Wasser redispergierbaren Pulvern zu mischen.

Erfindungsgemäße Polymermischungen in Form von wässrigen Dispersionen werden vorzugsweise hergestellt, indem wässrige Dispersionen von Polymerisaten A) mit wässrigen Dispersionen von Polymerisaten B) gemischt werden. Erfindungsgemäße Dispersionen sind auch erhältlich, indem erfindungsgemäße Polymermischungen in Form von in Wasser redispergierbaren Pulvern enthaltend Polymerisate A) und B) in Wasser redispergiert werden. Schließlich können auch Polymerisate A) und/oder Polymerisate B) in Form von in Wasser redispergierbaren Pulvern mit wässrigen Dispersionen enthaltend Polymerisate A) und/oder Polymerisate B) redispergiert werden.

Ein weiterer Gegenstand der Erfindung sind Baustoffmassen enthaltend ein oder mehrere hydraulisch abbindende Bindemittel, ein oder mehrere Füllstoffe und gegebenenfalls ein oder mehrere Additive, dadurch gekennzeichnet, dass
die Baustoffmassen zusätzlich ein oder mehrere erfindungsgemäße Polymermischungen in Form von wässrigen Dispersionen oder in Wasser redispergierbaren Pulvern enthalten.

Ein weiterer Gegenstand der Erfindung ist die Verwendung der erfindungsgemäßen Polymermischungen in Form von wässrigen Dispersionen oder in Wasser redispergierbaren Pulvern als Additiv für Baustoffmassen, insbesondere für bauchemische Produkte, gegebenenfalls in Verbindung mit hydraulisch abbindenden Bindemitteln, beispielsweise für die Herstellung von Bauklebern, Putzen, Spachtelmassen, Fußbodenspachtelmassen, Dichtschlämmen, Fugenmörtel oder Farben.

Besonders bevorzugt ist der Einsatz der Polymermischungen in Fliesenklebern, Fugenmörtel, Putzen, Spachtelmassen oder Dichtschlämmen. Am meisten bevorzugt sind Fliesenkleber oder Fugenmörtel. Beispiele für Fliesen sind Steingut-, Steinzeug-, Feinsteinzeug- oder insbesondere Keramik-Fliesen.

Beispiele für hydraulisch abbindende Bindemittel sind Zement, insbesondere Portland-, Aluminat-, Trass-, Hütten-, Magnesia- oder Phosphat-Zement, Gips oder Wasserglas. Bevorzugt ist Zement. Beispiele für Füllstoffe sind Quarzsand, Calciumcarbonat oder Talkum. Zusätzlich können die Baustoffmassen Verdickungsmittel enthalten, beispielsweise Polysaccharide, wie Celluloseether oder modifizierte Celluloseether, Stärkeether, Guar Gum, Xanthan Gum, Polycarbonsäuren, wie Polyacrylsäure und deren Teilester, Casein oder assoziativ wirkende Verdicker. Beispiele für weitere Additive sind Abbindebeschleuniger, wie Alkali- oder Erdalkalisalze von anorganischen oder organischen Säuren. Darüber hinaus sind noch zu nennen: Hydrophobierungsmittel, Filmbildehilfsmittel, Dispergiermittel, Schaumstabilisatoren, Entschäumer, Verflüssiger und Fließmittel.

Typische Rezepturen enthalten 5 bis 80 Gew.-%, insbesondere 20 bis 50 Gew.-% hydraulisch-abbindende Bindemittel, 5 bis 85 Gew.-%, insbesondere 40 bis 70 Gew.-% Füllstoffe, 0,1 bis 60 Gew.-%, insbesondere 0,5 bis 15 Gew.-% der erfindungsgemäßen Polymermischungen, gegebenenfalls 0,1 bis 5 Gew.-%, insbesondere 0,1 bis 3 Gew.-% Verdickungsmittel und gegebenenfalls Additive, wobei sich die Angaben in Gew.-% auf das Trockengewicht der Rezeptur beziehen und sich insgesamt auf 100 Gew.-% addieren. Vor Applikation wird der Rezeptur noch die übliche Menge Wasser zugegeben.

Zur Herstellung der Baustoffmassen werden die Polymermischungen in Form von wässrigen Dispersionen oder in Wasser redispergierbaren Pulvern mit den weiteren Rezepturbestandteilen, wie Zement, Füllstoff und weiteren Zuschlägen, in üblichen Mischern gemischt und homogenisiert. Das Dispersionspulver kann auch in eine wässrige Redispersion überführt und in dieser Form zugegeben werden. Vorzugsweise wird eine Trockenmischung hergestellt und das zur Verarbeitung erforderliche Wasser unmittelbar vor der Verarbeitung hinzugefügt. Bei der Herstellung von pastösen Bauklebern wird vorzugsweise zunächst der Wasseranteil vorgelegt, die Dispersion oder das Pulver zugegeben und abschließend die Feststoffe eingerührt.

Vorteilhafterweise kann mit den erfindungsgemäßen Polymermischungen die offene Zeit von Baustoffmassen verlängert und zugleich deren Standfestigkeit erhöht werden. Damit ist es gelungen, an sich widerstrebende Eigenschaften von Baustoffmassen mit ein und demselben Additiv gleichzeitig zu verbessern. Darüber hinaus zeigen ausgehärtete Produkte von erfindungsgemäßen Baustoffmassen eine verbesserte Verformungsstabilität. Zudem können durch Einsatz der erfindungsgemäßen Polymermischungen weitere Verarbeitungseigenschaften von Mörtelmassen verbessert werden, wie beispielsweise deren Viskositätsstabilität. Besonders überraschend war hierbei, dass der Einsatz der erfindungsgemäßen Polymerisate A) und B) in Form der erfindungsgemäßen Mischungen zu einer signifikanten Verbesserung der vorgenannten Eigenschaften führt im Vergleich zum entsprechenden alleinigen Einsatz der Polymerisate A) oder B). Damit ist die erfindungsgemäße Kombination von Polymerisaten A) und B) mit einem synergistischen Effekt verbunden.

Die folgenden Beispiele dienen der detaillierten Erläuterung der Erfindung und sind in keiner Weise als Einschränkung zu verstehen.

### Herstellung von Polymermischungen

Polymermischungen in Form von in Wasser redispergierbaren Pulvern wurden hergestellt, indem die im folgenden aufgeführten Dispersionspulver in Verhältnissen entsprechend den Angaben in den weiter unten aufgeführten Tabellen 1 bis 3 in einem herkömmlichen Labor-Mischer gemischt wurden.

### Dispersionspulver A (DPP-A):

Dispersionspulver basierend auf einem Polymer von Vinylacetat und Ethylen mit einer Tg von 16°C, stabilisiert mit Polyvinylalkohol, mit Calciumcarbonat als Antiblockmittel.

### Dispersionspulver B (DPP-B):

Dispersionspulver basierend auf einem Polymer von Vinylacetat, Methylmethacrylat und Ethylen mit einer Tg von 13°C, stabilisiert mit Polyvinylalkohol, mit Calciumcarbonat als Antiblockmittel.

### Dispersionspulver C (DPP-C):

Dispersionspulver basierend auf einem Polymer von Vinylacetat, Vinylchlorid und Ethylen mit einer Tg von 13°C, stabilisiert mit Polyvinylalkohol, mit Calciumcarbonat als Antiblockmittel.

### Austestung der Polymermischungen in Mörteln

### Verarbeitungseigenschaften von Fliesenkleber-Mörtel:

Es wurden Mörtel der folgenden Rezeptur entsprechend der EN 12004 hergestellt und ausgeprüft, wie im Folgenden beschrieben:

| | |
|---|---|
| Portlandzement CEM 42,5 | 420 Teile, |
| Quarzsand F34 | 440 Teile, |
| Durcal 65 | 81 Teile, |
| Tylose MH10007P4 | 4 Teile, |
| Calciumformat | 10 Teile, |
| Dispersionspulver | 45 Teile. |

Zum Anmachen des Mörtels wurden 24 ml Wasser pro 100 g der Bestandteile der Rezeptur eingesetzt.

Die in den jeweiligen (Vergleichs)Beispielen eingesetzten Dispersionspulver sowie die Austestungsergebnisse sind in Tabelle 1 angegeben.

### Beurteilung der Kellenklebrigkeit:

Der jeweilige Mörtel wurde mit einer Kelle aufgenommen und in den Mischtopf zurückgeworfen. Dabei wurde geprüft, ob der Mörtel hinsichtlich seiner Kellenklebrigkeit den Anforderungen des Anwenders genügt. Zusätzlich wurde beobachtet, ob und wie der Mörtel an einer senkrecht gehaltenen Kelle abrutschte. Die Bewertung erfolgte qualitativ an Hand folgender Prüfkriterien:
Note 1: typische Kellenklebrigkeit, optimale Eigenschaft;
Note 2: typische Kellenklebrigkeit, noch ausreichend;
Note 3: zu geringe Kellenklebrigkeit.

### Beurteilung der Thixotropie (Standfestigkeit):

Mit einem Messerspatel wurde in Spatelbreite eine Furche bis auf den Grund des Mischgefäßes in den Mörtel gezogen. Die Thixotropie wurde danach beurteilt, wie stark die Tendenz des Mörtels war, an den Furchenflanken wieder zusammenzufließen oder zusammenzusacken. Zusätzlich wurde mit dem Messerspatel der Klebemörtel aufgenommen und beobachtet, ob er an der senkrecht gehaltenen Spachtelfläche ablief oder abfloss. Die Bewertung erfolgte qualitativ an Hand folgender Prüfkriterien:
Note 1: Mörtel ist ideal thixotrop und hochgradig standfest, ohne klebrig zu sein;
Note 2: Mörtel ist thixotrop und standfest, etwas klebrig;
Note 3: Mörtel ist befriedigend thixotrop und befriedigend standfest.

### Beurteilung der Hautbildung und des Ausschwimm-Verhaltens:

Der Mörtel wurde in einen Plastikbehälter gefüllt und 60 Minuten offen stehen gelassen. Visuell wurde zunächst geprüft, ob der Mörtel zum Bluten/Ausschwimmen (Austreten von Wasser auf der Mörteloberfläche) neigte. Des Weiteren wurde mit einem Messerspatel geprüft, ob sich während der Ruhezeit auf dem Klebemörtel eine Haut gebildet hatte. Die Bewertung erfolgte qualitativ an Hand folgender Prüfkriterien:
Note 1: keinerlei Ausschwimmen und keinerlei Hautbildung;
Note 2: ganz leichtes Ausschwimmen oder ganz leichte Hautbildung;
Note 3: leichtes Ausschwimmen oder leichte Hautbildung.

### Beurteilung des Gäreffekts (Luftblasen-Bildung):

Der Mörtel wurde in einen Plastikbecher gegeben und 60 Minuten offen stehen gelassen. Beurteilt wurde, ob sich nach der Ruhezeit im Mörtel Luftblasen, insbesondere große Luftblasen, aufbauten. Die Bewertung erfolgte qualitativ an Hand folgender Prüfkriterien:
Note 1: keinerlei Gäreffekt, Kleber unverändert;
Note 2: geringfügiger Gäreffekt;
Note 3: deutlicher Aufbau von Luft, Gäreffekt, nach Aufrühren ursprüngliche Konsistenz wieder erreichbar.

### Beurteilung des Nachdickens und des Viskositätsanstiegs:

Der Kleber wurde in einen Plastikbecher gefüllt und 60 Minuten offen stehen gelassen. Anschließend wurde mit folgenden Prüfkriterien geprüft, ob und gegebenenfalls wie stark der Mörtel nachdickte:
Note 1: keinerlei Nachdicken, Mörtel unverändert;
Note 2: kaum spürbares geringes Nachdicken des Mörtels;
Note 3: leichtes Nachdicken, Mörtel lässt sich noch gut verarbeiten;
Note 4: deutliches Nachdicken, nach Aufrühren lässt sich der Mörtel wieder verarbeiten.

Die Ergebnisse zeigen, dass die erfindungsgemäßen Mörtel der Beispiele (Bsp.) 3 bis 5 bessere Verarbeitungseigenschaften zeigen als die Mörtel der Vergleichsbeispiele (VBsp.) 1 und 2. Durch die erfindungsgemäße Vorgehensweise werden insbesondere die Kellenklebrigkeit, der Gäreffekt, die Hautbildung und auch das Nachdicken des Mörtels verbessert.

**Tabelle 1: Verarbeitungseigenschaften der Fliesenkleber-Mörtel:**

| | | | | | | | |
|---|---|---|---|---|---|---|---|
| | 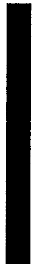 | 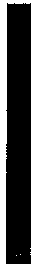 | 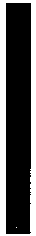 | 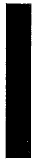 | 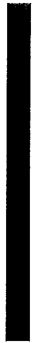 | 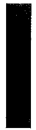 | 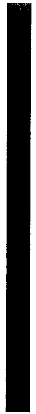 |
| VBsp.1 | 100 | 0 | 2 | 2 | 2-3 | 2 | 3 |
| VBsp.2 | 0 | 100 | 2 | 1-2 | 2 | 2 | 2-3 |
| Bsp.3 | 25 | 75 | 1 | 1 | 1-2 | 1 | 2 |
| Bsp.4 | 50 | 50 | 1 | 1 | 1-2 | 1 | 1-2 |
| Bsp.5 | 80 | 20 | 1 | 1 | 1-2 | 1 | 1-2 |

### Bestimmung der offenen Zeit der Mörtel:

Die offene Zeit (Einheit: N/mm²) wurde gemäß EN 12004 (Prüfnormen EN 1348 und EN 1346) nach 5, 20 sowie 30 Minuten bestimmt unter Einsatz folgender Rezeptur:

| | |
|---|---|
| Portlandzement CEM 42,5 | 420 Teile, |
| Quarzsand F34 | 440 Teile, |
| Durcal 65 | 81 Teile, |
| Tylose MH10007P4 | 4 Teile, |
| Calciumformat | 10 Teile, |
| Dispersionspulver | 45 Teile. |

Zum Anmachen des Mörtels wurden 24 ml Wasser pro 100 g der Bestandteile der Rezeptur eingesetzt.

Die in den jeweiligen (Vergleichs)Beispielen eingesetzten Dispersionspulver sowie die Austestungsergebnisse sind in Tabelle 2 angegeben.

**Tabelle 2: Austestung der offenen Zeit:**

| | DPP-B | DPP-C | offene Zeit | | |
|---|---|---|---|---|---|
| | | | 5' | 20' | 30' |
| VBsp.6 | 100 | 0 | 2,05 | 1,25 | 0,45 |
| VBsp.7 | 0 | 100 | 2,10 | 1,20 | 0,55 |
| Bsp.8 | 30 | 70 | 2,10 | 1,60 | 1,05 |
| Bsp.9 | 50 | 50 | 2,00 | 1,45 | 0,60 |
| Bsp.10 | 70 | 30 | 2,25 | 1,30 | 0,80 |

Die Ergebnisse der Tabelle 2 zeigen, dass die Mörtel der Beispiele 8 bis 10 mit den erfindungsgemäßen Polymermischungen gegenüber den Vergleichsbeispielen 6 und 7 deutliche Vorteile in der offenen Zeit, insbesondere nach 30 Minuten aufweisen.

### Verformungsstabilität von Probekörpern:

Die Bestimmung erfolgte gemäß EN 12002 unter Beanspruchung der Probekörper mit einer Dreipunkt-Biegebelastung. Folgende Mörtel-Rezeptur kam hierbei zum Einsatz:

| | |
|---|---|
| Portlandzement CEM I 42,5R | 350 Teile, |
| Quarzsand F31 | 291,2 Teile, |
| Quarzsand F34 | 300 Teile, |
| Tylose MB 15009 P2 | 3 Teile, |
| Solvitose H 2060 | 0,8 Teile, |
| Calciumformiat | 5 Teile, |
| Dispersionspulver | 50 Teile. |

Zum Anmachen des Mörtels wurden 23 ml Wasser pro 100 g der Bestandteile der Rezeptur eingesetzt.

Die in den jeweiligen (Vergleichs)Beispielen eingesetzten Dispersionspulver sowie die Austestungsergebnisse sind in Tabelle 3 angegeben.

Auch diese Ergebnisse veranschaulichen, dass das erfindungsgemäße Beispiel 13 gegenüber den Vergleichsbeispielen 11 und 12 hinsichtlich der Verformungsstabilität der Probekörper erheblich vorteilhaft ist.

**Tabelle 3: Austestung der Verformungsstabilität:**

| | DPP-A | DPP-C | Durchbiegung [mm] |
|---|---|---|---|
| VBsp.11 | 100 | 0 | 2,36 |
| VBsp.12 | 0 | 100 | 2,21 |
| Bsp.13 | 50 | 50 | 2,62 |

## Patentansprüche

1. Polymermischungen in Form von wässrigen Dispersionen oder in Wasser redispergierbaren Pulvern enthaltend
A) ein oder mehrere Schutzkolloid-stabilisierte Polymerisate basierend auf 20 bis 30 Gew.-% Vinylchlorid, 50 bis 75 Gew.-% Vinylacetat, 5 bis 20 Gew.-% Ethylen und gegebenenfalls einem oder mehreren zusätzlichen weiteren ethylenisch ungesättigten Monomeren, wobei sich die Angaben in Gew.-% auf das Gesamtgewicht der Monomere beziehen und sich auf 100 Gew.-% aufaddieren, und
B) ein oder mehrere Schutzkolloid-stabilisierte, Vinylhalogenid-freie Polymerisate von einem oder mehreren ethylenisch ungesättigten Monomeren.

2. Polymermischungen in Form von wässrigen Dispersionen oder in Wasser redispergierbaren Pulvern gemäß Anspruch 1, **dadurch gekennzeichnet, dass** ein oder mehrere Schutzkolloide ausgewählt werden aus der Gruppe umfassend teilverseifte oder vollverseifte Polyvinylalkohole; Polyvinylpyrrolidone; Polyvinylacetale; Polysaccharide in wasserlöslicher Form; Proteine; Ligninsulfonate; Poly(meth)acrylsäure; Copolymerisate von (Meth)acrylaten mit carboxylfunktionellen Comonomereinheiten; Poly(meth)acrylamid; Polyvinylsulfonsäuren und deren wasserlöslichen Copolymere; Melaminformaldehydsulfonate; Naphthalinformaldehydsulfonate; Styrolmaleinsäure- und Vinylethermaleinsäure-Copolymere.

3. Polymermischungen in Form von wässrigen Dispersionen oder in Wasser redispergierbaren Pulvern gemäß Anspruch 1 oder 2, **dadurch gekennzeichnet, dass** die Polymermischungen 5 bis 95 Gew.-% an einem oder mehreren Polymerisaten A) enthalten, bezogen auf das Trockengewicht der Polymerisate A) und B).

4. Polymermischungen in Form von wässrigen Dispersionen oder in Wasser redispergierbaren Pulvern gemäß Anspruch 1 oder 2, **dadurch gekennzeichnet, dass** die Polymermischungen 5 bis 95 Gew.-% an einem oder mehreren Polymerisaten B) enthalten, bezogen auf das Trockengewicht der Polymerisate A) und B).

5. Polymermischungen in Form von wässrigen Dispersionen oder in Wasser redispergierbaren Pulvern gemäß Anspruch 1 bis 4, **dadurch gekennzeichnet, dass** die Polymermischungen 5 bis 95 Gew.-% an Polymerisaten A) und Polymerisaten B) enthalten, bezogen auf das Trockengewicht der Polymermischungen.

6. Polymermischungen in Form von wässrigen Dispersionen oder in Wasser redispergierbaren Pulvern gemäß Anspruch 1 bis 5, **dadurch gekennzeichnet, dass** die weiteren ethylenisch ungesättigten Monomere der Polymerisate A) ausgewählt werden aus der Gruppe umfassend Vinylester, (Meth)acrylsäureester, Vinylaromaten, Olefine und 1,3-Diene.

7. Polymermischungen in Form von wässrigen Dispersionen oder in Wasser redispergierbaren Pulvern gemäß Anspruch 1 bis 6, **dadurch gekennzeichnet, dass** die Polymerisate A) auf einem oder mehreren Vinylhalogeniden, einem oder mehreren Vinylestern und gegebenenfalls einem oder mehreren zusätzlichen weiteren ethylenisch ungesättigten Monomeren basieren.

8. Polymermischungen in Form von wässrigen Dispersionen oder in Wasser redispergierbaren Pulvern gemäß Anspruch 1 bis 7, **dadurch gekennzeichnet, dass** die Polymerisate B) auf einem oder mehreren ethylenisch ungesättigten Monomeren ausgewählt aus der Gruppe umfassend Vinylester, (Meth)acrylsäureester, Vinylaromaten, Olefine und 1,3-Diene basieren.

9. Verfahren zur Herstellung der Polymermischungen in Form von wässrigen Dispersionen oder in Wasser redispergierbaren Pulvern aus Anspruch 1 bis 8, **dadurch gekennzeichnet, dass** ein oder mehrere Polymerisate A) und ein oder mehrere Polymerisate B) gemischt werden.

10. Baustoffmassen enthaltend ein oder mehrere hydraulisch abbindende Bindemittel, ein oder mehrere Füllstoffe und gegebenenfalls ein oder mehrere Additive, **dadurch gekennzeichnet, dass**
die Baustoffmassen zusätzlich ein oder mehrere Polymermischungen in Form von wässrigen Dispersionen oder in Wasser redispergierbaren Pulvern aus Anspruch 1 bis 8 enthalten.

11. Verwendung der Polymermischungen in Form von wässrigen Dispersionen oder in Wasser redispergierbaren Pulvern aus Anspruch 1 bis 8 als Additiv für Baustoffmassen, gegebenenfalls in Verbindung mit hydraulisch abbindenden Bindemitteln, für die Herstellung von Bauklebern, Putzen, Spachtelmassen, Fußbodenspachtelmassen, Dichtschlämmen, Fugenmörtel oder Farben.

## Claims

1. Polymer mixtures in the form of aqueous dispersions or water-redispersible powders comprising
A) one or more protective colloid-stabilized polymers based on 20% to 30% by weight of vinyl chloride, 50% to 75% by weight of vinyl acetate, 5% to 20% by weight of ethylene and optionally one or more additional further ethylenically unsaturated monomers, where the figures in % by weight are based on the total weight of the monomers and add up to 100% by weight, and
B) one or more protective colloid-stabilized, vinyl halide-free polymers of one or more ethylenically unsaturated monomers.

2. Polymer mixtures in the form of aqueous dispersions or water-redispersible powders according to Claim 1, **characterized in that** one or more protective colloids are selected from the group comprising partly hydrolyzed or fully hydrolyzed polyvinyl alcohols; polyvinylpyrrolidones; polyvinyl acetals; polysaccharides in water-soluble form; proteins; lignosulfonates; poly(meth)acrylic acid; copolymers of (meth)acrylates with carboxy-functional comonomers units; poly(meth)acrylamide; polyvinylsulfonic acids and the water-soluble copolymers thereof; melamine formaldehydesulfonates; naphthalene formaldehydesulfonates; styrene-maleic acid and vinyl ether-maleic acid copolymers.

3. Polymer mixtures in the form of aqueous dispersions or water-redispersible powders according to Claim 1 or 2, **characterized in that** the polymer mixtures comprise 5% to 95% by weight of one or more polymers A), based on the dry weight of polymers A) and B).

4. Polymer mixtures in the form of aqueous dispersions or water-redispersible powders according to Claim 1 or 2, **characterized in that** the polymer mixtures comprise 5% to 95% by weight of one or more polymers B), based on the dry weight of polymers A) and B).

5. Polymer mixtures in the form of aqueous dispersions or water-redispersible powders according to Claims 1 to 4, **characterized in that** the polymer mixtures comprise 5% to 95% by weight of polymers A) and polymers B), based on the dry weight of the polymer mixtures.

6. Polymer mixtures in the form of aqueous dispersions or water-redispersible powders according to Claims 1 to 5, **characterized in that** the further ethylenically unsaturated monomers of polymers A) are selected from the group comprising vinyl esters, (meth)acrylic esters, vinylaromatics, olefins and 1,3-dienes.

7. Polymer mixtures in the form of aqueous dispersions or water-redispersible powders according to Claims 1 to 6, **characterized in that** the polymers A) are based on one or more vinyl halides, one or more vinyl esters and optionally one or more additional further ethylenically unsaturated monomers.

8. Polymer mixtures in the form of aqueous dispersions or water-redispersible powders according to Claims 1 to 7, **characterized in that** the polymers B) are based on one or more ethylenically unsaturated monomers selected from the group comprising vinyl esters, (meth)acrylic esters, vinylaromatics, olefins and 1,3-dienes.

9. Process for producing the polymer mixtures in the form of aqueous dispersions or water-redispersible powders from Claims 1 to 8, **characterized in that** one or more polymers A) and one or more polymers B) are mixed.

10. Building material compositions comprising one or more hydraulically setting binders, one or more fillers and optionally one or more additives, **characterized in that**
the building material compositions additionally comprise one or more polymer mixtures in the form of aqueous dispersions or water-redispersible powders from Claims 1 to 8.

11. Use of the polymer mixtures in the form of aqueous dispersions or water-redispersible powders from Claims 1 to 8 as additive for building material compositions, optionally in conjunction with hydraulically setting binders, for the production of construction adhesives, renders, spackling compounds, floor leveling compounds, sealing compounds, joint mortars or paints.

## Revendications

1. Mélanges de polymères sous la forme de dispersions aqueuses ou de poudres redispersibles dans de l'eau, contenant :
A) un ou plusieurs polymères stabilisés par des colloïdes protecteurs, à base de 20 à 30 % en poids de chlorure de vinyle, 50 à 75 % en poids d'acétate de vinyle, 5 à 20 % en poids d'éthylène et éventuellement un ou plusieurs monomères éthyléniquement insaturés supplémentaires, les données en % en poids se rapportant au poids total des monomères et leur somme étant de 100 % en poids, et
B) un ou plusieurs polymères exempts d'halogénures de vinyle, stabilisés par des colloïdes protecteurs, d'un ou de plusieurs monomères éthyléniquement insaturés.

2. Mélanges de polymères sous la forme de dispersions aqueuses ou de poudres redispersibles dans de l'eau selon la revendication 1, **caractérisés en ce qu'**un ou plusieurs colloïdes protecteurs sont choisis dans le groupe comprenant les alcools polyvinyliques partiellement saponifiés ou entièrement saponifiés, les polyvinylpyrrolidone, les polyvinylacétals, les polysaccharides sous forme soluble dans l'eau, les protéines, les sulfonates de lignine, l'acide poly(méth)acrylique, les copolymères de (méth)acrylates avec des unités comonomères à fonction carboxyle, le poly(méth)acrylamide, les acides polyvinylsulfoniques et leurs copolymères solubles dans l'eau, les sulfonates de mélamine-formaldéhyde, les sulfonates de naphtaline-formaldéhyde, les copolymères de styrène-acide maléique et d'éther vinylique-acide maléique.

3. Mélanges de polymères sous la forme de dispersions aqueuses ou de poudres redispersibles dans de l'eau selon la revendication 1 ou 2, **caractérisés en ce que** les mélanges de polymères contiennent 5 à 95 % en poids d'un ou de plusieurs polymères A), par rapport au poids sec des polymères A) et B).

4. Mélanges de polymères sous la forme de dispersions aqueuses ou de poudres redispersibles dans de l'eau selon la revendication 1 ou 2, **caractérisés en ce que** les mélanges de polymères contiennent 5 à 95 % en poids d'un ou de plusieurs polymères B), par rapport au poids sec des polymères A) et B).

5. Mélanges de polymères sous la forme de dispersions aqueuses ou de poudres redispersibles dans de l'eau selon les revendications 1 à 4, **caractérisés en ce que** les mélanges de polymères contiennent 5 à 95 % en poids de polymères A) et de polymères B), par rapport au poids sec des mélanges de polymères.

6. Mélanges de polymères sous la forme de dispersions aqueuses ou de poudres redispersibles dans de l'eau selon les revendications 1 à 5, **caractérisés en ce que** les monomères éthyléniquement insaturés supplémentaires des polymères A) sont choisis dans le groupe comprenant les esters de vinyle, les esters de l'acide (méth)acrylique, les composés aromatiques de vinyle, les oléfines et les 1,3-diènes.

7. Mélanges de polymères sous la forme de dispersions aqueuses ou de poudres redispersibles dans de l'eau selon les revendications 1 à 6, **caractérisés en ce que** les polymères A) sont à base d'un ou de plusieurs halogénures de vinyle, d'un ou de plusieurs esters de vinyle et éventuellement d'un ou de plusieurs monomères éthyléniquement insaturés supplémentaires.

8. Mélanges de polymères sous la forme de dispersions aqueuses ou de poudres redispersibles dans de l'eau selon les revendications 1 à 7, **caractérisés en ce que** les polymères B) sont à base d'un ou de plusieurs monomères éthyléniquement insaturés choisis dans le groupe comprenant les esters de vinyle, les esters de l'acide (méth)acrylique, les composés aromatiques de vinyle, les oléfines et les 1,3-diènes.

9. Procédé de fabrication des mélanges de polymères sous la forme de dispersions aqueuses ou de poudres redispersibles dans de l'eau selon les revendications 1 à 8, **caractérisé en ce qu'**un ou plusieurs polymères A) sont mélangés avec un ou plusieurs polymères B).

10. Matériaux de construction contenant un ou plusieurs liants à prise hydraulique, une ou plusieurs charges et éventuellement un ou plusieurs additifs, **caractérisés en ce que** les matériaux de construction contiennent en outre un ou plusieurs mélanges de polymères sous la forme de dispersions aqueuses ou de poudres redispersibles dans de l'eau selon les revendications 1 à 8.

11. Utilisation des mélanges de polymères sous la forme de dispersions aqueuses ou de poudres redispersibles dans de l'eau selon les revendications 1 à 8 en tant qu'additif pour des matériaux de construction, éventuellement conjointement avec des liants à prise hydraulique, pour la fabrication de colles de construction, d'enduits, de mastics, de mastics pour le sol, de boues d'étanchéité, de mortiers d'assemblage ou de peintures.
